# EUROPEAN PATENT APPLICATION

(11) **EP 4 535 507 A1**
(43) Date of publication of application: **09.04.2025**
(21) Application number: 23811102.5
(22) Date of filing: 24.05.2023
(51) Int. Cl.: H01M 10/54

(54) **METHOD FOR PREPARING BATTERY-GRADE GRAPHITE BY USING MIXED WASTE OF POSITIVE AND NEGATIVE ELECTRODE MATERIALS OF FAILED LITHIUM-ION BATTERY AS RAW MATERIAL**

(30) Priority: 25.05.2022 WO PCT/CN2022/094973
(71) Applicant: BASF SE, 67056 Ludwigshafen am Rhein (DE)
(72) Inventor: ZOU, Yuan, Shanghai 200137 (CN); ZHANG, Hao Xuan, Shanghai 200137 (CN); ROHDE, Wolfgang, 67056 Ludwigshafen Am Rhein (DE); PENG, Hai Jung, Shanghai 200137 (CN); YANG, Yue, Changsha, Hunan 410083 (CN); YI, Chen Xing, Changsha, Hunan 410083 (CN); MA, Xue Song, Changsha, Hunan 410083 (CN); LEI, Shu Ya, Changsha, Hunan 410083 (CN)
(74) Representative: Maiwald GmbH
(86) International application number: PCT/CN2023/096075
(87) International publication number: WO 2023/227032

(57) **Abstract**

The present invention discloses a method for preparing battery-grade graphite by using mixed waste of positive and negative electrode materials of a failed lithium-ion battery as a raw material, the method comprising: placing mixed waste of positive and negative electrode materials of a failed lithium-ion battery in a muffle furnace, and performing low-temperature roasting surface modification, which removes adhesive and residual electrolyte from the surfaces of the electrode materials, to obtain a powder; placing the powder in a flotation machine, adding clean water and stirring the slurry, improving a subsequent flotation separation effect of positive and negative electrode materials; on the basis of a difference in hydrophilic and hydrophobic properties of the positive and negative electrode materials, separating the positive electrode material from negative electrode graphite by means of flotation to obtain a foam product (a body rich in negative electrode graphite) and an ore slurry product (a body rich in positive electrode material); and after the foam product has undergone weak acid washing and been filtered and dried, performing repair at a high temperature to obtain a graphite product which has excellent electrochemical properties. By means of performing low-temperature roasting surface modification, flotation separation, weak acid washing and high-temperature graphitization repair on mixed waste of positive and negative electrode materials of a failed lithium-ion battery, the present invention recycles negative electrode graphite in the mixed waste of positive and negative electrode materials.

## Description

### Technical Field

The present invention relates to the field of waste lithium-ion battery material recycling, in particular a method for preparing battery-grade graphite by using mixed waste of positive and negative electrode materials of a failed lithium-ion battery as raw material.

### Background Art

Since the development and use of lithium-ion batteries in the 1990s, with their many advantages, such as high energy density, light weight, long life cycle, no memory effect and environmental friendliness, lithium-ion batteries have been widely used in portable electronic devices such as cell phones, laptops and cameras. In recent years, with the vigorously promoted use of new energy vehicles, the production of lithium-ion batteries has increased year by year, and a period of mass-scrapping of lithium-ion batteries has followed. Used lithium-ion batteries contain large amounts of valuable metals, such as nickel, cobalt, manganese, lithium, copper and aluminum; moreover, organic matter, such as residual electrolyte and adhesive, and heavy metals, such as nickel, cobalt and manganese, in the used lithium-ion batteries can heavily pollute the environment. Therefore, how to effectively recover and process used lithium-ion batteries poses a serious challenge to recycling resources and environmental protection.

A large amount of research has been carried out to achieve recycling of used lithium-ion batteries. After first dismantling, discharging, mechanically breaking and screening a waste lithium-ion battery, mixed waste of positive and negative electrodes is obtained (mainly positive electrode material (lithium cobalt oxide, lithium nickel cobalt manganese oxide or lithium iron phosphate, etc.), negative electrode material (graphite), and a small amount of copper, aluminum, adhesive and residual electrolyte). The waste is then placed in an acidic solution, and the high-value metals, such as nickel, cobalt, manganese and lithium, in the positive electrode material are recovered. Existing methods focus mostly on recovering metal elements in waste positive electrode material, and neglect the recycling of graphite in the negative electrode material.

In fact, graphite is widely used in many fields, such as the fields of fire-resistant materials, conductive materials, corrosion-resistant materials, high-temperature metallurgical materials, adsorption materials and battery materials, and is an important type of strategic mineral resource. A large amount of graphite in a failed lithium-ion battery cannot be recycled, not only causing waste of resources, but also contaminating the environment. Now, researchers are gradually beginning to focus on the problem of graphite recycling. For example, Cao et al. use a method of acid leaching and alkali extraction to recover graphite and prepare it into an electrode material for treatment of BPA and COD in organic wastewater, with removal rates of 100% and 87.4%, respectively. Zhang et al. load magnesium ions on waste graphite using concentrated nitric acid and magnesium nitrate, and adsorb precipitated phosphate in an aqueous solution, with a phosphate removal rate of 95%. Zhao et al. graft manganese dioxide onto graphite using potassium permanganate and nitric acid, and use the modified graphite for heavy metal water treatment, with Pb, Cd and Ag removal rates of 99.9%, 79.7% and 99.8%, respectively. The above-mentioned research achieves the use of graphite resources as materials, but whether a catalytic material or adsorption material, the graphite thereof only acts as a carrier; the market demand is small, and it is difficult to accommodate the large amount of graphite produced by failed lithium-ion batteries. Through a repair means, regenerating graphite and re-applying it to lithium-ion batteries is an ideal solution to the problem of waste graphite. Ruan et al. treat waste graphite through acid leaching, heat treatment and coating; the regenerated graphite has a smaller specific surface area, reduced pore defects, a higher degree of graphitization and better electrochemical properties, but the method uses a lot of acid, costs are high, and the recovery process produces a large amount of waste acid, which is harmful to the environment. Chinese patent CN 111924836 A reports a method for recovering and regenerating negative electrode graphite of spent lithium-ion batteries: discharging and disassembling a waste lithium-ion battery to obtain a negative electrode plate, and after the plate is dried, separating waste graphite from copper foil by knocking; then roasting the graphite in two stages, converting an organic component in the graphite into amorphous carbon, while on the basis of the transport properties of lithium atoms at different temperatures, achieving the pre-lithiation of graphite, to obtain pre-lithiated graphite; and mixing the pre-lithiated graphite with an organic mixed carbon source evenly, and roasting in a rotary furnace, to obtain a regenerated graphite negative electrode material. The method involves a simple process and a short workflow, and does not use an acid or alkali solution. However, careful disassembly is required to obtain the negative electrode plate, the recovery rate of waste graphite is lower using the method of knocking the electrode plate, and the low-temperature repair is unable to convert amorphous carbon produced by roasting an organic component into a graphite structure with good electrochemical properties, the electrochemical properties being affected. Chinese patent CN 107887666 B mixes a waste lithium-ion battery negative electrode plate with a separating agent, to obtain an initial product of negative electrode graphite and copper foil; the graphite initial product undergoes organic acid reductive leaching to obtain high-purity graphite powder, and the graphite powder is regenerated through graphitization to prepare graphite material. The separating agent and leaching agent used in this method can be reused through distillation and recovery, which is economical and environmentally friendly, but organic acid leaching can still lead to increased interlayer spacing of graphite and a reduced degree of graphitization, affecting the electrochemical properties of the regenerated graphite. The above-mentioned research has made certain progress in the field of graphite regeneration, but these methods are mainly aimed at recovering the waste negative electrode plate material after careful dismantling, and how to recover graphite from mixed waste of positive and negative electrodes is still undeveloped. Therefore, for mixed waste of positive and negative electrodes, the present invention reports a graphite recycling method that is based on a low-temperature roasting surface modification treatment, flotation separation, weak acid washing and high-temperature graphitization restoration, for the efficient recovery and recycling of graphite in mixed waste of positive and negative electrodes.

### Summary of the Invention

For a series of problems in the prior art, such as the difficult treatment of positive and negative electrode mixed waste and poor electrochemical properties of recovered graphite, the present invention provides a method for regenerating graphite from positive and negative electrode mixed waste. The method regenerates lithium battery graphite negative electrode material with excellent electrochemical properties, by means of steps such as low-temperature roasting surface modification treatment, flotation separation of positive electrode material and graphite, graphite weak acid washing and graphitization high-temperature restoration. The method is simple and efficient, clean and environmentally friendly, low-cost, and readily suited to industrial production.

To achieve the above objectives, the present invention provides a method for preparing battery-grade graphite by using mixed waste of positive and negative electrode materials of a failed lithium-ion battery as a raw material, the method comprising the following steps:
1) placing mixed waste of positive and negative electrode materials of a failed lithium-ion battery in a muffle furnace, and performing low-temperature roasting surface modification in an air atmosphere to obtain powder;
2) adding clean water to the powder of step (1) and mixing to form a slurry, placing the slurry in a flotation machine, and after stirring the slurry, adding a collector and a foaming agent to the slurry, and obtaining a foam product (a body rich in negative electrode graphite) and an ore slurry product (a body rich in positive electrode material) by flotation separation;
3) after filtering and drying the foam product obtained in step (2), adding sulfuric acid of a certain concentration and hydrogen peroxide and performing weak acid washing, obtaining a leached liquid and a leached residue after filtering, and obtaining negative electrode graphite after drying the leached residue; and
4) after filtering and drying the negative electrode graphite of step (3), placing the negative electrode graphite in a high-temperature graphitization furnace and performing oxygen-free heating, to obtain a regenerated graphite product.

In a preferred solution, in the low-temperature roasting modification process of step 1), a temperature-rising rate is 5 - 20°C/minute, a roasting temperature is 400 - 600°C, and a heat preservation time is 10 - 60 minutes.

In a preferred solution, in the slurry stirring process of step 2), a slurry mass concentration is 20 - 25%, a stirring rotation speed is 1500 - 2000 r/min, and the time is 5 - 20 min.

In a preferred solution, the flotation in step 2) uses a flotation open circuit of coarse sorting once and fine sorting twice.

In a preferred solution, the flotation of step 2) uses one of, or a combination of more than one of, n-dodecane, kerosene, diesel and sodium dodecyl sulfate to act as the collector, and uses one of, or a combination of more than one of, methyl isobutyl carbinol (MIBC), number 2 oil and secondary octanol to act as the foaming agent.

In a preferred solution, the flotation conditions of step 2) are: pH = 7 - 11, a dosage of coarse sorting collector is 200 - 1000 g/t, a dosage of coarse sorting foaming agent is 50 - 500 g/t, only foaming agent is added for fine sorting, a first dosage of fine sorting foaming agent is 50 - 100 g/t, and a second dosage of fine sorting foaming agent is 25 - 50 g/t, and a foam product and an ore slurry product are finally obtained by flotation separation, and the graphite grade in the foam product > 95%, a graphite recovery rate > 65%, and a positive electrode material recovery rate in the ore slurry product > 97%.

In a preferred solution, in the weak acid washing process of step 3), a liquid-solid ratio is 10 - 30, sulfuric acid concentration is 0.01 - 0.2 mol/L, hydrogen peroxide consumption is 3-5 times a theoretical value, the temperature is 50 - 100°C, and the time is 0 - 100 min.

In a preferred solution, in the graphitization repair process of step 4), a temperature-rising rate is 5 - 20°C/minute, a repair temperature is 1300 - 2800°C, a heat preservation time is 2 - 10 hours, and the graphitization degree of the repaired product is 90 - 99%.

For positive and negative electrode mixed waste of a failed lithium-ion battery, the present invention provides a method for regenerating and recycling waste graphite negative electrode material. By means of low-temperature roasting surface modification of mixed waste of positive and negative electrode materials, adhesive and residual electrolyte are removed from the surfaces of the electrode materials, increasing the difference in hydrophilic and hydrophobic properties of waste positive and negative electrode materials, which creates beneficial conditions for subsequent flotation separation; by stirring the slurry, the positive and negative electrode materials are caused to dissociate from each other, reducing an adhesive effect between particles, and improving the subsequent flotation separation effect; by adding a flotation agent, the slurry flotation environment is improved, further increasing the difference in hydrophilic and hydrophobic properties between graphite and positive electrode material and impurities, effectively separating and recovering positive and negative electrode materials, and the process of weak acid washing further purifies the graphite of remaining impurities; and by means of high-temperature graphitization of the recovered graphite, the graphite surface microscopic morphology and layered structure are repaired, improving the graphite product performance. Compared with the prior art, the present invention has the following advantages: (1) the present invention causes clean and effective separation of spent lithium-ion battery positive and negative electrodes, by means of low-temperature roasting modification-flotation separation, providing a good basis for the recovery and regeneration of graphite in mixed waste of a spent lithium-ion battery; (2) acid consumption is extremely low in the overall recovery and regeneration process, and as well as being low in cost, clean and environmentally friendly, strong acids and alkalis are prevented from damaging the graphite structure, such that the recovered and regenerated graphite has excellent electrochemical properties; and (3) through the process of high-temperature graphitization, the graphite surface microscopic morphology and layered structure are repaired, restoring the electrochemical properties of the graphite.

The battery-grade graphite prepared by using mixed waste of positive and negative electrode materials of a failed lithium-ion battery as a raw material of the present invention may be fitted in a button cell battery, the composition thereof comprising lithium-ion positive electrode material, suitable electrolyte, a separator and the regenerated battery-grade graphite material of claim 1. The battery-grade graphite prepared by using mixed waste of positive and negative electrode materials of a failed lithium-ion battery as a raw material of the present invention is suitable for preparing lithium-ion batteries, electronic product energy storage, industrial battery energy storage, electric vehicle or electric bicycle power sources. The electronic products are cell phones, cameras, laptops, tablets and hand-held power tools. The industrial batteries are wind energy, solar energy storage and standby power sources.

### Brief Description of the Drawings

To explain the technical solution in embodiments of the present invention or in the prior art more clearly, there follows a simple description of the accompanying drawings that need to be used in description of embodiments or the prior art. Obviously, the drawings in the description below are only some embodiments of the present invention, and a person skilled in the art could obtain other drawings based on these drawings without expending any inventive effort.
Figs. 1, 2, 3, 4 and 5 show scanning electron microscope (SEM) images of battery-grade graphite prepared by using mixed waste of positive and negative electrode materials of a failed lithium-ion battery as a raw material provided by the present invention;
Fig. 6 is a flowchart for preparing battery-grade graphite by using mixed waste of positive and negative electrode materials of a failed lithium-ion battery as a raw material provided by the present invention;
Fig. 7 shows X-ray diffraction (X-rd) spectra of battery-grade graphite prepared by using mixed waste of positive and negative electrode materials of a failed lithium-ion battery as a raw material provided by the present invention;
Fig. 8 shows recovered graphite contact angle diagrams of battery-grade graphite prepared by using mixed waste of positive and negative electrode materials of a failed lithium-ion battery as a raw material provided by the present invention;
Fig. 9 shows Raman spectra of battery-grade graphite prepared by using mixed waste of positive and negative electrode materials of a failed lithium-ion battery as a raw material provided by the present invention;
Fig. 10 shows TG-DTA analysis charts of battery-grade graphite prepared by using mixed waste of positive and negative electrode materials of a failed lithium-ion battery as a raw material provided by the present invention;
Fig. 11 shows test charts of 100 cycles and 350 cycles, respectively under constant current charge and discharge conditions of 0.2C and 1C, rate capability charts and first-time coulombic efficiency charts of a button cell battery prepared from recycled battery-grade graphite prepared by using mixed waste of positive and negative electrode materials of a failed lithium-ion battery as a raw material provided by the present invention.

### Detailed Description of Embodiments

To clarify the objectives, technical solutions and advantages of the present invention, the present invention is explained in further detail below through specific embodiments and comparative examples, and with reference to drawings.

### Embodiment 1

The present invention provides a method for preparing battery-grade graphite by using mixed waste of positive and negative electrode materials of a failed lithium-ion battery as a raw material, the raw material being mixed waste of failed ternary lithium-ion battery positive and negative electrodes bought on the market and denoted by BM-NT; the method comprises the following steps:
1) low-temperature roasting mixed waste of positive and negative electrode materials of a failed lithium-ion battery at 400°C in an air atmosphere for 20 minutes to obtain a powder denoted as BM-T;
2) adding clean water to the powder and mixing to form a slurry with a mass percentage of 21%, and placing the slurry in an XFD_{IV} laboratory 1.5 L flotation machine;
3) specific flotation process parameters being: ore slurry pH = 10.68; air filling amount: 0.4 m³/hour; first operation of coarse sorting and stirring slurry: 10 minutes; dosage of collector n-dodecane added thereafter: 500 g/t; dosage of foaming agent MIBC: 300 g/t; scraping foam: 3 minutes; first operation of fine sorting and stirring: 5 minutes; dosage of foaming agent MIBC added thereafter: 75 g/t; scraping foam: 2 minutes; second operation of fine sorting and stirring: 5 minutes; dosage of foaming agent MIBC added thereafter: 37.5 g/t; and scraping foam: 2 minutes; and obtaining a foam product and an ore slurry product through an open circuit flotation process of one operation of coarse sorting and two operations of fine sorting, the graphite grade in the foam product being 95.13%, a graphite recovery rate being 69.60%, the positive electrode material grade in the ore slurry product being 87.5%, and a positive electrode material recovery rate being 97.31%; and
3) after the foam product is filtered and dried, placing the foam product in a high-temperature graphitization furnace, performing oxygen-free heating for 4 hours to 2800°C at a temperature-rising rate of 12°C/minute, and a graphite product obtained after recovery and repair being 2800-TF-K.

The recovered and repaired graphite material 2800-TF-K is electrochemically tested. A CR2016 type button lithium-ion battery is assembled: the recovered and repaired graphite material, acetylene black and carboxymethyl cellulose solution are mixed evenly in a mass ratio of 8:1:1 and then applied to copper foil, pressed into a circular thin plate with a diameter of 6 - 8 mm, and then after being dried in a vacuum drying box, this acts as an electrode. A mixed solution of LiPF6 in EC and DMC (volume ratio 1:1) of 1 mol/L acts as an electrolyte, fiberglass acts as a separator, a metal lithium plate acts as a counter electrode, and the materials are made into a CR2016 type button lithium-ion battery in a glovebox filled with argon gas.

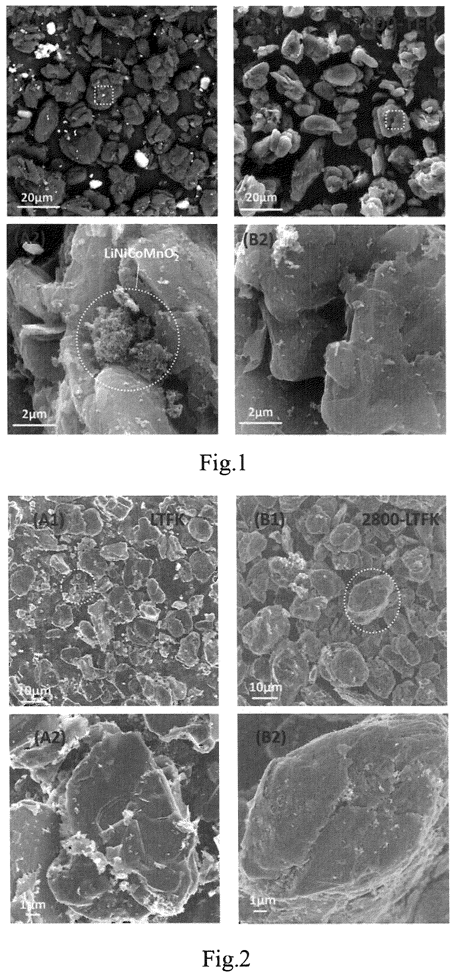

After the battery is assembled, a Land battery testing system is used to carry out a constant current charge and discharge test at a temperature of 25°C and a test voltage range of 0.01 to 2.0 V. The test content comprises: cycle performance at a 0.2C rate for 100 cycles, cycle performance at a 1C rate for 350 cycles, and rate capabilities (0.1C, 0.2C, 0.5C, 1C, 2C, 5C). Fig. 1 shows scanning electron microscope images of graphite product 2800-TF-K; it can be seen from Fig. 1 A1-2 that graphite in flotation concentrate TFK contains a small amount of ternary material, and it can be seen from Fig. 1 B1-2 that graphite surface impurities after a graphitization treatment at 2800°C are significantly reduced, and the graphite layered structure is obvious.

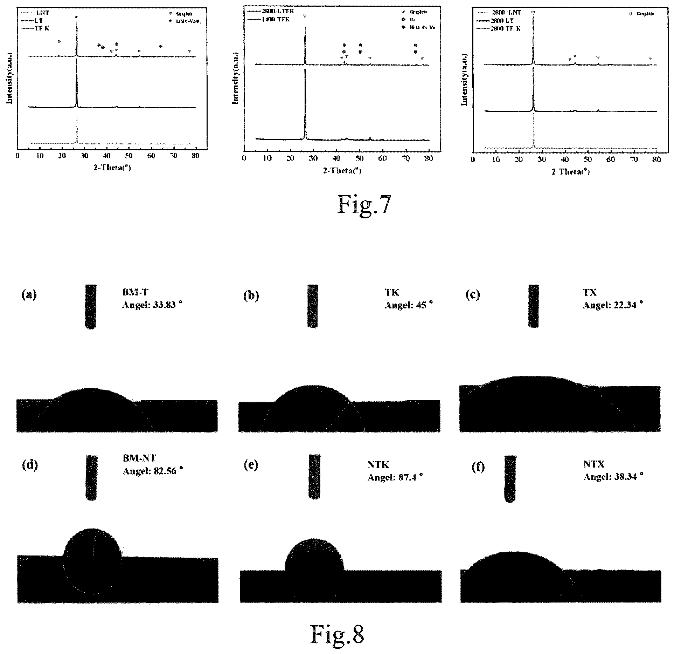

Fig. 7 shows X-ray diffraction (X-rd) spectra of recovered and repaired graphite provided by the present invention; a graphite peak of graphite product 2800-TF-K is obvious, and other impurity peaks are basically absent, and it can be seen from Table 1 that the width at half maximum of 2800-TF-K is reduced, the graphite unit cell crystal spacing is smaller, and the graphitization degree is 99.02%, indicating that the crystalline structure of the graphite has been repaired well during the recovery process. Table 2 shows element composition analysis of recovered graphite provided by the present invention; it can be seen that the purity of 2800-TF-K reaches 99.92%, and metal impurities are almost absent, indicating that the graphite obtains good purity in the recovery process.

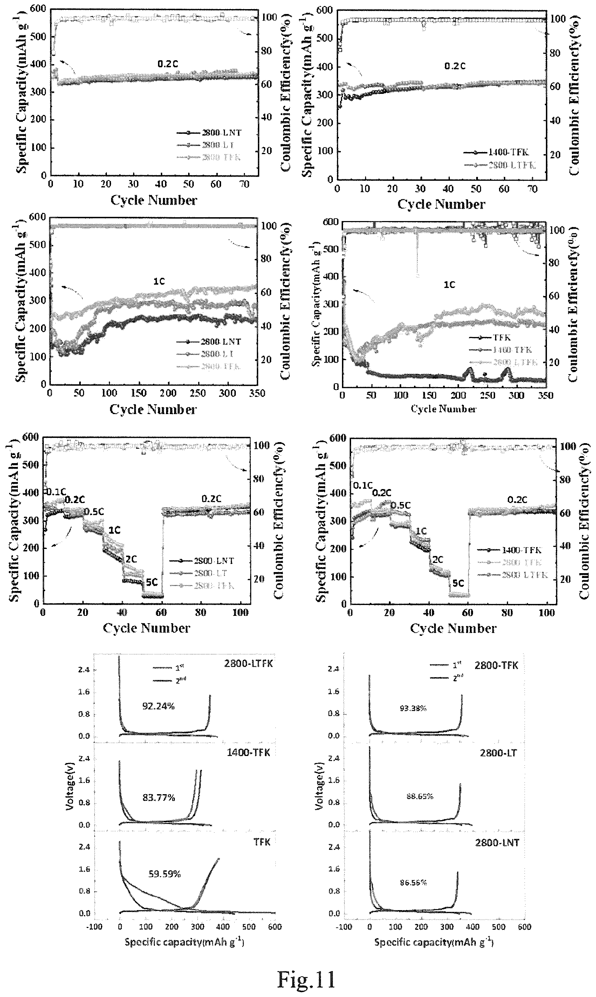

Fig. 11 shows test charts of 100 cycles and 350 cycles, respectively under constant current charge and discharge conditions of 0.2C and 1C, and rate test charts of a button cell battery prepared from recovered and repaired graphite provided by the present invention; under the condition of 0.2C, the discharge capacity of graphite product 2800-TF-K reaches 371 mAh/g, the capacity retention rate exceeds 99.99%, and under the condition of 1C, the discharge capacity reaches 354 mAh/g, the capacity retention rate exceeds 99.99%, and first-time coulombic efficiency is 93.38%.

### Embodiment 2

The waste used in this embodiment is the same as in embodiment 1, and the method comprises the following steps:
1) taking and putting 10 g of foam product after flotation in embodiment 1 in 300 ml of sulfuric acid solution with a concentration 0.1 mol/L, adding in 4 times a theoretical amount of hydrogen peroxide, the temperature being 80°C, and after leaching for 90 minutes, filtering to obtain a leached liquid and leached residue, and leaching rates of lithium, nickel, cobalt and manganese in the leached liquid all being close to 100%; and
2) after the leached residue is dried, placing the leached residue in a high-temperature graphitization furnace, performing oxygen-free heating for 4 hours to 2800°C at a temperature-rising rate of 12°C/minute, and a graphite product obtained after recovery and repair being denoted by 2800-LTFK.

The recovered and repaired graphite material 2800-LNT is electrochemically tested. The button lithium-ion battery assembly method and electrochemical testing method used in the present embodiment are the same as in embodiment 1.

Fig. 2 shows scanning electron microscope images of graphite product 2800-LTFK; it can be seen from Fig. 2 A1-2 that metal impurities in LTFK after flotation and leaching are almost absent, and the graphite surface has a small amount of amorphous carbon, and it can be seen from Fig. 2 B1-2 that 2800-LTFK surface impurities after a graphitization treatment at 2800°C are significantly reduced, amorphous carbon content is reduced, and the graphite layered structure is obvious.

Fig. 7 shows X-ray diffraction (X-rd) spectra of recovered and repaired graphite provided by the present invention; a graphite peak of graphite product 2800-LTFK is obvious, and other impurity peaks are basically absent, and it can be seen from Table 1 that the change in the interlayer spacing of the graphite after weak acid washing is not great, and the graphitization degree of 2800-LTFK is 98.65%, and therefore weak acid washing causes little damage to the graphite structure.

Table 2 shows element composition analysis of recovered graphite provided by the present invention; it can be seen that the purity of 2800-LTFK reaches 99.97%, and metal impurities are almost absent, indicating that the graphite obtains good purity in the recovery process.

Fig. 11 shows test charts of 100 cycles and 350 cycles, respectively under constant current charge and discharge conditions of 0.2C and 1C, and rate test charts of a button cell battery prepared from recovered and repaired graphite provided by the present invention; under the condition of 0.2C, the discharge capacity of graphite product 2800-LTFK reaches 343.3 mAh/g, the capacity retention rate exceeds 99.99%, and under the condition of 1C, the discharge capacity reaches 270.2 mAh/g, the capacity retention rate exceeds 99.99%, and first-time coulombic efficiency is 92.24%.

By means of flotation-weak acid washing, the present embodiment further removes impurities in recovered graphite and fully recovers valuable metals such as Ni, Co, Mn and Li in positive electrode material. At the same time, the use of weak acid washing prevents acid from damaging the graphite structure, and the repaired and regenerated graphite product has good electrochemical properties.

### Comparative example 1

The waste used in this embodiment is the same as in embodiment 1, and the method comprises the following steps:
1) adding clean water to mixed waste BM-NT of positive and negative electrode materials of a failed lithium-ion battery and mixing to form a slurry with a mass percentage of 50 - 70%, and placing the slurry in a ball mill and performing a ball mill treatment for 5 minutes, the rotation speed being 65 - 75% of the critical rotation speed of the ball mill;
2) adding clean water to the ball-milled material and mixing to form a slurry with a mass percentage of 21%, and placing the slurry in an XFD_{IV} laboratory 1.5 L flotation machine;
3) specific flotation process parameters being: ore slurry pH = 10.68; air filling amount: 0.4 m³/hour; after stirring the slurry for 10 minutes, dosage of dispersant sodium hexametaphosphate added: 1500 g/t; dosage of collector n-dodecane: 300 g/t; dosage of foaming agent MIBC: 50 g/t; scraping foam: 3 minutes; obtaining a foam product and an ore slurry product; graphite grade in foam product: 33.54%; graphite recovery rate: 88.46%; positive electrode material grade in ore slurry product: 86.25%; and positive electrode material recovery rate: 33.63%.

It can be seen from Figs. 8(b), (c), (e) and (f) that a contact angle of the foam product after flotation separation is significantly higher than that of the ore slurry product, indicating that the greater the contact angle, the stronger the hydrophobicity of the material and the higher the buoyancy. It can be seen from the contact angles (a) and (d) of Figure 7 that the contact angle of positive and negative electrode mixed waste of a failed lithium-ion battery is 82.56°, the hydrophobicity is very strong, and the buoyancy of the material is very high, the contact angle (d) of the waste is close to that of the flotation foam product (e), indicating the hydrophobic and hydrophilic properties of the concentrate and raw ore are similar, the concentrate yield is extremely high, but the flotation separation effect is not good. Through low-temperature roasting surface modification, the contact angle of the waste is reduced to 33.83° and the hydrophobicity is reduced, with the result that the buoyancy is reduced, the roasted material undergoes flotation separation, and the difference between the contact angles of raw ore, concentrate and tailings is obvious, indicating that roasting effectively increases the flotation separation effect. Compared to embodiment 1, after direct flotation separation of positive and negative electrode mixed waste of a failed lithium-ion battery which has not undergone low-temperature roasting surface modification, the graphite concentrate grade at 33.54% and the positive electrode material recovery rate at 33.63% are much lower than 95.13% and 97.31% in embodiment 1, and the separation effect is not good.

### Comparative example 2

1) low-temperature roasting mixed waste of positive and negative electrode materials of a failed lithium-ion battery at 400°C in an air atmosphere for 20 minutes to obtain a powder denoted as BM-T;
2) adding clean water to the powder and mixing to form a slurry with a mass percentage of 21%, and placing the slurry in an XFD_{IV} laboratory 1.5 L flotation machine; and
3) specific flotation process parameters being: ore slurry pH = 10.68; air filling amount: 0.4 m³/hour; after stirring the slurry for 10 minutes, dosage of collector n-dodecane added: 200 g/t; dosage of foaming agent MIBC: 200 g/t; scraping foam: 3 minutes; obtaining a foam product and an ore slurry product; graphite grade in foam product: 77.68%; graphite recovery rate: 48.62%; positive electrode material grade in ore slurry product: 78.83%; and positive electrode material recovery rate: 91.17%.

Compared to embodiment 1, lower dosages of collector and foaming agent are used, the recovery rates of positive and negative electrode materials are both lower than in embodiment 1, and the separation effect is not good.

### Comparative example 3

1) low-temperature roasting mixed waste of positive and negative electrode materials of a failed lithium-ion battery at 400°C in an air atmosphere for 20 minutes to obtain a powder denoted as BM-T;
2) adding clean water to the powder and mixing to form a slurry with a mass percentage of 30%, and placing the slurry in an XFD_{IV} laboratory 1.5 L flotation machine; and
3) specific flotation process parameters being: ore slurry pH = 10.68; air filling amount: 0.4 m³/hour; after stirring the slurry for 10 minutes, dosage of collector n-dodecane added: 500 g/t; dosage of foaming agent MIBC: 300 g/t; scraping foam: 3 minutes; obtaining a foam product and an ore slurry product; graphite grade in foam product: 54.56%; graphite recovery rate: 93.23%; positive electrode material grade in ore slurry product: 96.33%; and positive electrode material recovery rate: 76.12%.

Compared to embodiment 1, a higher flotation concentration is used, and more positive electrode material is carried into the foam product, with the result that the positive electrode material recovery rate is much lower than in embodiment 1.

### Comparative example 4

1) low-temperature roasting mixed waste of positive and negative electrode materials of a failed lithium-ion battery at 400°C in an air atmosphere for 20 minutes to obtain a powder denoted as BM-T;
2) adding clean water to the powder and mixing to form a slurry with a mass percentage of 21%, placing the slurry in an XFD_{IV} laboratory 1.5 L flotation machine, and adding sulfuric acid to adjust the pH of the ore slurry to 5, 7 and 9, respectively; and
3) other flotation process parameters being: air filling amount: 0.4 m³/hour; after stirring the slurry for 10 minutes, dosage of collector n-dodecane added: 500 g/t; dosage of foaming agent MIBC: 300 g/t; scraping foam: 3 minutes; obtaining a foam product and an ore slurry product; and flotation indexes under different pH conditions being as shown in the following table. At natural pH, the separation effect of NCM and graphite is most obvious, while NCM has the highest recovery rate.

| pH | Concentrate yield (%) | Graphite grade (%) | Graphite recovery rate (%) | NCM recovery rate (%) |
|---|---|---|---|---|
| 5 | 33.37 | 63.38 | 85.67 | 85.18 |
| 7 | 32.18 | 67.45 | 87.91 | 86.97 |
| 9 | 25.96 | 74.07 | 77.87 | 92.43 |
| 10.78 (natural) | 25.92 | 76.77 | 80.59 | 94.33 |

### Comparative example 5

1) low-temperature roasting mixed waste of positive and negative electrode materials of a failed lithium-ion battery at 400°C in an air atmosphere for 20 minutes to obtain a powder denoted as BM-T;
2) adding clean water to the powder and mixing to form a slurry with a mass percentage of 21%, and placing the slurry in an XFD_{IV} laboratory 1.5 L flotation machine; and
3) other flotation process parameters being: pH = 10.78 (natural); air filling amount: 0.4 m³/hour; after stirring the slurry for 10 minutes, adding ethylenediaminetetraacetic acid (EDTA); dosage of collector n-dodecane added: 500 g/t; dosage of foaming agent MIBC: 300 g/t; scraping foam: 3 minutes; obtaining a foam product and an ore slurry product; and flotation indexes under different EDTA dosages being as shown in the following table. After adding EDTA, the graphite recovery rate does not change greatly and there is a serious loss in NCM recovery rate, and therefore EDTA is not beneficial for separation and recovery of graphite and NCM. In addition to EDTA, the present invention also investigates the effect of commonly used inhibitors of graphite ore, such as tartaric acid, citric acid and sodium hexametaphosphate, on the separation of graphite and NCM; the studies show that this series of chemical compounds has no positive effect on the separation of positive and negative electrode mixed waste of a failed lithium-ion battery.

| EDTA (g/t) | Concentrate yield (%) | Graphite grade (%) | Graphite recovery rate (%) | NCM recovery rate (%) |
|---|---|---|---|---|
| 0 | 25.92 | 76.77 | 80.59 | 94.33 |
| 200 | 26.22 | 71.05 | 79.78 | 88.19 |
| 400 | 28.21 | 68.60 | 82.87 | 84.51 |
| 600 | 24.49 | 73.66 | 77.27 | 87.87 |
| 800 | 24.41 | 73.04 | 76.37 | 86.93 |
| 1000 | 25.73 | 72.19 | 79.55 | 85.84 |

### Comparative example 6

The waste used in this embodiment is the same as in embodiment 1, and the method comprises the following steps:
1) taking and putting 10 g of waste BM-NT in 100 ml of sulfuric acid solution with a concentration 4 mol/L, adding in 4 times a theoretical amount of hydrogen peroxide, the temperature being 80°C, and after leaching for 60 minutes, filtering to obtain a leached liquid and leached residue, and leaching rates of lithium, nickel, cobalt and manganese in the leached liquid all being close to 100%; and
2) after the leached residue is dried, placing the leached residue in a high-temperature graphitization furnace, performing oxygen-free heating for 4 hours to 2800°C at a temperature-rising rate of 12°C/minute, and a graphite product obtained after recovery and repair being denoted by 2800-LNT.

The recovered and repaired graphite material 2800-LNT is electrochemically tested. The button lithium-ion battery assembly method and electrochemical testing method used in the present embodiment are the same as in embodiment 1.

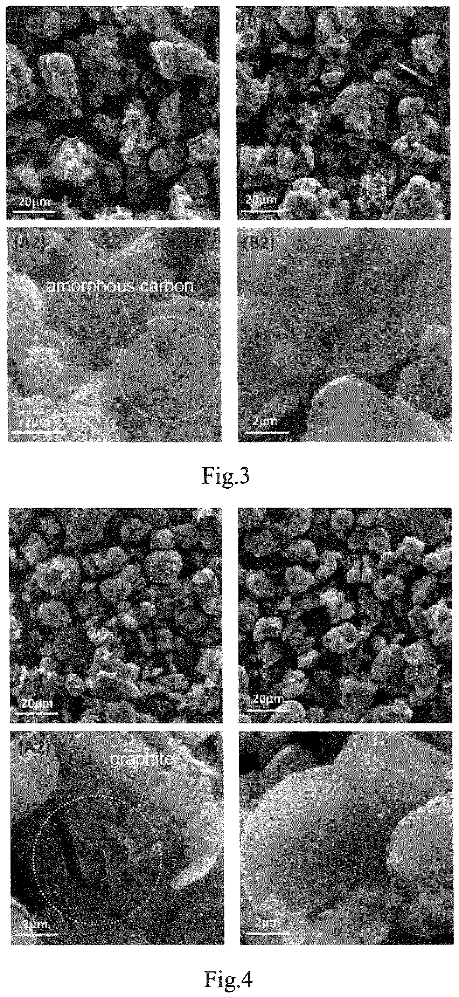

Fig. 3 shows scanning electron microscope images of graphite product 2800-LNT; it can be seen from Fig. 3 A1-2 that an interlayer opening phenomenon occurs in the acid leached graphite material, which also contains a lot of amorphous carbon, and it can be seen from Fig. 3 B1-2 that graphite surface impurities after a graphitization treatment at 2800°C are significantly reduced, but amorphous carbon and acetylene black are still present in 2800-LNT, which may have a bad effect on subsequent electrochemical properties.

Fig. 7 shows X-ray diffraction (X-rd) spectra of recovered and repaired graphite provided by the present invention; a graphite peak of graphite product 2800-LNT is obvious, and other impurity peaks are basically absent, and it can be seen from Table 1 that the interlayer spacing of graphite after acid leaching is enlarged, complete repair is also difficult through high temperatures and graphitization, the graphitization degree of 2800-LNT is 98.06%, and the graphitization degree is lower than 99.02% of embodiment 1. Fig. 11 shows test charts of 100 cycles and 350 cycles, respectively under constant current charge and discharge conditions of 0.2C and 1C, and rate test charts of a button cell battery prepared from recovered and repaired graphite provided by the present invention; under the condition of 0.2C, the discharge capacity of graphite product 2800-LNT reaches 357 mAh/g, the capacity retention rate exceeds 99.99%, and under the condition of 1C, the discharge capacity reaches 233.9 mAh/g, the capacity retention rate exceeds 99.99%, and first-time coulombic efficiency is 86.56%.

Compared to embodiment 1, the graphitization degree of 2800-LNT is reduced by 0.96%, discharge capacity is reduced by 14 mAh/g under the condition of 0.2C, discharge capacity is reduced by 120.1 mAh/g under condition 1C, and first-time coulombic efficiency is reduced by 6.82%.

### Comparative example 7

The waste used in this embodiment is the same as in embodiment 1, and the method comprises the following steps:
1) low-temperature roasting mixed waste of positive and negative electrode materials of a failed lithium-ion battery at 400°C in an air atmosphere for 20 minutes to obtain a powder denoted as BM-T;
2) taking and putting 10 g of powder material BM-T in 100 ml of sulfuric acid solution with a concentration 4 mol/L, adding in 3 times a theoretical amount of hydrogen peroxide, the temperature being 50°C, and after leaching for 1 hour, filtering to obtain a leached liquid and leached residue, and leaching rates of lithium, nickel, cobalt and manganese in the leached liquid all being close to 100%; and
3) after the leached residue is dried, placing the leached residue in a high-temperature graphitization furnace, performing oxygen-free heating for 4 hours to 2800 C hours at a temperature-rising rate of 12°C/minute, and a graphite product obtained after recovery and repair being denoted by 2800-LT.

The recovered and repaired graphite material 2800-LT is electrochemically tested. The button lithium-ion battery assembly method and electrochemical testing method used in the present embodiment are the same as in embodiment 1.

Fig. 4 shows scanning electron microscope images of graphite product 2800-LNT; it can be seen from Fig. 4 A1-2 that an interlayer opening phenomenon occurs in the acid leached graphite material LT, which also contains a lot of amorphous carbon, and it can be seen from Fig. 4 B1-2 that graphite surface impurities after a graphitization treatment at 2800°C are significantly reduced, but amorphous carbon and acetylene black are still present in 2800-LT, which may have a bad effect on subsequent electrochemical properties.

Fig. 7 shows X-ray diffraction (X-rd) spectra of recovered and repaired graphite provided by the present invention; a graphite peak of graphite product 2800-LT is obvious, and other impurity peaks are basically absent, and it can be seen from Table 1 that the interlayer spacing of graphite after acid leaching is enlarged, complete repair is also difficult at high temperature and through graphitization, the graphitization degree of 2800-LT is 98.61%, and the graphitization degree is lower than 99.02% of embodiment 1.

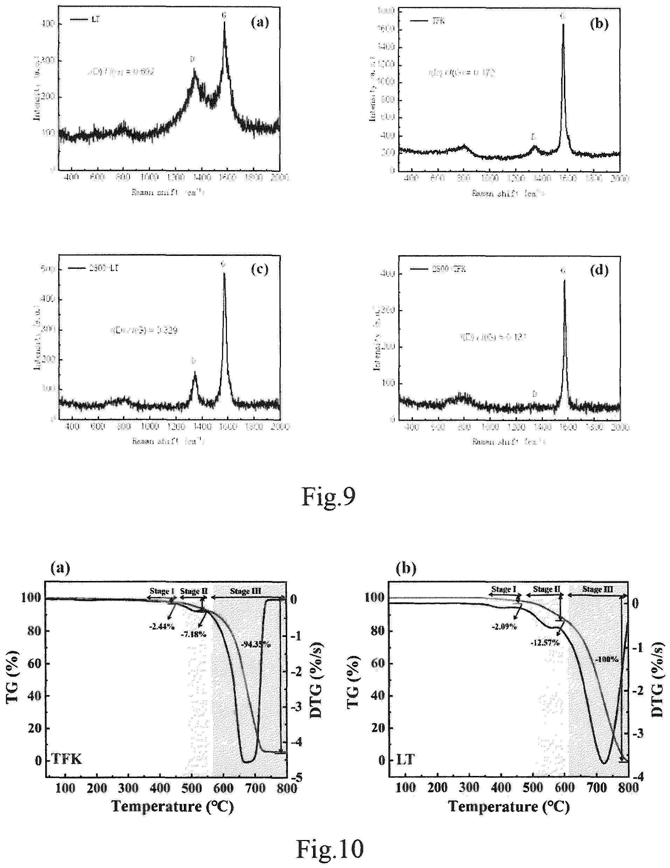

Fig. 9 shows Raman spectra of recovered graphite and repaired and regenerated graphite provided by the present invention; the value I(D)/I(G) is used to represent the content of amorphous carbon in the sample, and it can be seen from the figure that the directly leached and recovered graphite LT has a higher amorphous carbon content than that of graphite TFK recovered by flotation, and after high-temperature graphitization repair, amorphous carbon content of graphite product 2800-LT is reduced, but is still significantly higher than that of graphite product 2800-TFK, and the amorphous carbon may have a bad effect on the subsequent electrochemical properties.

Fig. 10 shows TG-DTA analysis of recovered graphite provided by the present invention; the thermogravimetric behaviors of LT and TFK before 800°C mainly divide into three stages: the first stage is thermal weight loss of a small amount of adhesive not removed by low-temperature roasting; and the second and third stages are mainly thermal weight loss of carbon material. Comparing the second stages of LT and TFK, the mass loss of LT at 12.57% is higher than that of TFK at 7.18%.
The main reason may be that LT has a high amorphous carbon content, and amorphous carbon is structurally unstable and the combustion temperature is lower than that of graphite which is structurally stable.

Fig. 11 shows test charts of 100 cycles and 350 cycles, respectively under constant current charge and discharge conditions of 0.2C and 1C, and rate test charts of a button cell battery prepared from recovered and repaired graphite provided by the present invention; under the condition of 0.2C, the discharge capacity of graphite product 2800-LNT reaches 380.2 mAh/g, the capacity retention rate is 99.61%, and under the condition of 1C, the discharge capacity reaches 285.6 mAh/g, the capacity retention rate exceeds 99.99%, and first-time coulombic efficiency is 88.65%.

Compared to embodiment 1, the graphitization degree of 2800-LT is reduced by 0.41%, discharge capacity is reduced by 68.4 mAh/g under the condition of 1C, and first-time coulombic efficiency is reduced by 4.73%.

### Comparative example 8

The waste used in this embodiment is the same as in embodiment 1, and the method comprises the following steps:
1) filtering and drying the foam product after flotation of embodiment 1 to obtain a powder; and
2) after the leached residue is dried, placing the leached residue in a tube furnace, performing oxygen-free heating for 4 hours to 1400°C at a temperature-rising rate of 10°C/minute, and a graphite product obtained after recovery and repair being denoted by 1400-TF-K.

The recovered and repaired graphite material 1400-TF-K is electrochemically tested. The button lithium-ion battery assembly method and electrochemical testing method used in the present embodiment are the same as in embodiment 1.

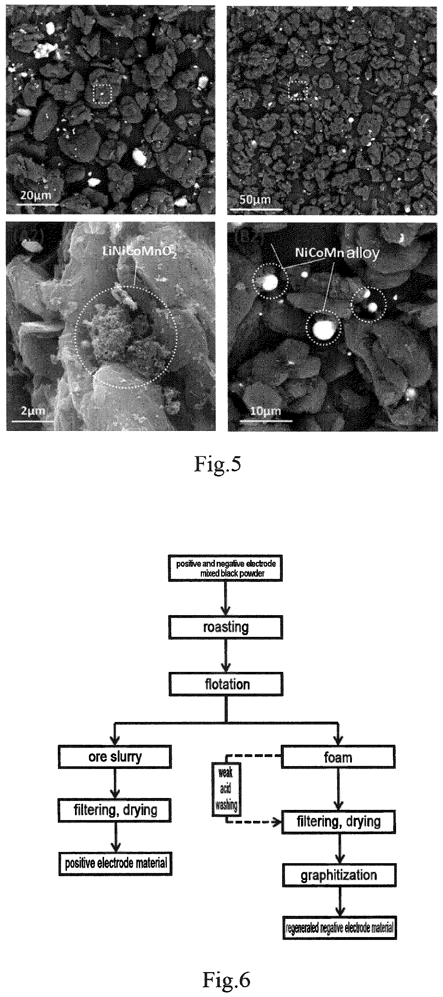

Fig. 5 shows scanning electron microscope images of graphite product 1400-TF-K; it can be seen from Fig. 5 that the graphite in flotation concentrate TFK contains a small amount of ternary material, and is reduced to metal spheres with high temperature, and a high temperature of 1400°C is unable to remove the metal spheres, which may have a bad effect on the subsequent electrochemical properties.

Fig. 7 shows X-ray diffraction (X-rd) spectra of recovered and repaired graphite provided by the present invention; it can be seen from the XRD graphs that the graphite in flotation concentrate TFK contains a small amount of ternary material, and after a 1400°C high-temperature treatment, the ternary material is reduced to a ternary metal alloy, but still acts as an impurity present within the graphite, and the 1400°C high-temperature treatment is unable to effectively remove impurities in the graphite, and it can be seen from Table 1 that the graphitization degree of 1400-TF-K is 99.10%.

Table 2 shows element composition analysis of recovered graphite provided by the present invention; it can be seen that the purity of 1400-TFK is only 91.97%, and residual metal impurities are mainly 2.88% nickel and 3.47% manganese, indicating that the 1400°C high-temperature treatment is unable to effectively remove impurities in the graphite.

Fig. 11 shows test charts of 100 cycles and 350 cycles, respectively under constant current charge and discharge conditions of 0.2C and 1C, and rate test charts of a button cell battery prepared from recovered and repaired graphite provided by the present invention; under the condition of 0.2C, the discharge capacity of graphite product 1400-TF-K reaches 351.5 mAh/g, the capacity retention rate exceeds 99.99%, and under the condition of 1C, the discharge capacity reaches 228.7 mAh/g, the capacity retention is 72.28%, and first-time coulombic efficiency is 83.77%.

Compared to embodiment 1, the discharge capacity of 1400-TF-K under the condition of 0.2C is reduced by 19.5 mAh/g, the discharge capacity under the condition of 1C is reduced by 125.3%, and the first-time coulombic efficiency is reduced by 9.61%.

Those skilled in the art will understand that the above discussion of any of the embodiments is merely exemplary, and is not intended to imply that the scope (comprising the claims) of the present disclosure is limited to these examples; in accordance with the idea of the present invention, technical features of the above embodiments or different embodiments may also be combined, the steps may be implemented in any order, and many other variations of different aspects of the present invention as described above exist but are not provided in detail for brevity.

The embodiments of the present invention aim to cover all such replacements, modifications and variations that fall within the broad scope of the appended claims. Therefore, any omissions, amendments, equivalent substitutions or improvements etc. made within the spirit and principles of the present invention shall be included in the scope of protection thereof.

**Table 1 Graphitization degree of sample**

| **Sample** | **2 θ (004)/°** | **Interlayer spacing (004)/nm** | **Graphitization degree /%** |
|---|---|---|---|
| **LNT** | 54.6429 | 0.16783 | 97.03 |
| **LT** | 54.6547 | 0.16779 | 97.81 |
| **TF-K** | 54.6605 | 0.16778 | 98.19 |
| **1400-TF-K** | 54.6743 | 0.16774 | 99.10 |
| **2800-LNT** | 54.6585 | 0.16778 | 98.06 |
| **2800-LT** | 54.6668 | 0.16776 | 98.61 |
| **2800-TF-K** | 54.6731 | 0.16774 | 99.02 |
| **2800-LTFK** | 54.6676 | 0.16775 | 98.65 |

**Table 2 Sample element analysis (%)**

| **Sample** | **C** | **Al** | **Cu** | **Li** | **Co** | **Ni** | **Mn** |
|---|---|---|---|---|---|---|---|
| **BM-NT** | 26.65 | 0.17 | 0.72 | 5.18 | 8.45 | 21.00 | 11.88 |
| **BM-T** | 24.69 | 0.23 | 0.72 | 4.98 | 8.78 | 22.18 | 11.98 |
| **LNT** | 99.06 | 0.05 | 0.03 | 0.00 | 0.01 | 0.02 | 0.01 |
| **LT** | 99.54 | 0.05 | 0.00 | 0.01 | 0.03 | 0.36 | 0.00 |
| **T-FK** | 94.07 | 0.021 | 0.015 | 0.56 | 1.061 | 2.61 | 1.52 |
| **1400-T-FK** | 91.97 | 0.11 | 0.026 | < 0.001 | 1.10 | 2.88 | 3.47 |
| **2800-LNT** | 99.59 | 0.006 | 0.008 | < 0.001 | < 0.001 | 0.002 | 0.005 |
| **2800-LT** | 99.76 | 0.004 | 0.004 | < 0.001 | < 0.001 | 0.001 | 0.004 |
| **2800-TF-K** | 99.92 | 0.007 | 0.004 | < 0.001 | < 0.001 | 0.003 | 0.009 |
| **2800-LTFK** | 99.97 | 0.007 | < 0.001 | < 0.001 | < 0.001 | 0.001 | 0.003 |

**Table 3 Cycle performance of sample**

| **Cycle perfor mance** | **0.2C cycle performanc e (mAh g⁻¹)** | **100th cycle coulom bic efficienc y (%)** | **100 cycle capacity retentio n rate (%)** | **1C cycle performan ce (mAh g⁻¹)** | **350th cycle coulombi c efficiency y (%)** | **350 cycle capacity retention rate o (%)** | **First-ti me coulom bic efficien cy** |
|---|---|---|---|---|---|---|---|
| **TFK** | - | - | - | 28.1 | > 99.99 | 7.35 | |
| **1400-T FK** | 351.5 | 99.77 | > 99.99 | 228.7 | 99.97 | 72.28 | 83.77 |
| **2800-L NT** | 357 | 99.66 | > 99.99 | 233.9 | 99.97 | > 99.99 | 86.56 |
| **2800-L T** | 380.2 | 99.66 | 99.61 | 285.6 | 99.89 | > 99.99 | 88.65 |
| **2800-T FK** | 371 | 99.9 | > 99.99 | 354.1 | 99.89 | > 99.99 | 93.38 |
| **2800-L TFK** | 343.3 | 99.62 | > 99.99 | 270.2 | 99.86 | > 99.99 | 92.24 |

**Table 4 Rate capability of sample**

| **Rate capabil ity** | **0.1C rate capability (mAh g-1)** | **0.2C rate capability (mAh g-1)** | **0.5C rate capability (mAh g-1)** | **1C rate capability (mAh g-1)** | **2C rate capability (mAh g-1)** | **5C rate capability (mAh g-1)** |
|---|---|---|---|---|---|---|
| **1400-T FK** | 317.77 | 322.73 | 284.1 | 208.61 | 111.19 | 32.56 |
| **2800-L NT** | 323.38 | 316.57 | 263.1 | 174.28 | 80.98 | 28.18 |
| **2800-L T** | 354.8 | 330.8 | 275.25 | 199.76 | 104.77 | 35.87 |
| **2800-T FK** | 366.3 | 339.97 | 294.63 | 226.68 | 127.04 | 37.4 |
| **2800-L TFK** | 306 | 353.5 | 330.3 | 237.5 | 126.3 | 33.1 |

## Claims

1. A method for preparing battery-grade graphite by using mixed waste of positive and negative electrode materials of a failed lithium-ion battery as a raw material, **characterized by** comprising the following steps:
1) placing mixed waste of positive and negative electrode materials of a failed lithium-ion battery in a muffle furnace, and performing low-temperature roasting surface modification in an air atmosphere to obtain a powder;
2) adding clean water to the powder of step (1) and mixing to form a slurry, placing the slurry in a flotation machine, and after stirring the slurry, adding a collector and a foaming agent to the slurry, and obtaining a foam product (a body rich in negative electrode graphite) and an ore slurry product (a body rich in positive electrode material) by flotation separation;
3) after filtering and drying the foam product obtained in step (2), adding sulfuric acid of a certain concentration and hydrogen peroxide and performing weak acid washing, obtaining a leached liquid and a leached residue after filtering, and obtaining negative electrode graphite after drying the leached residue; and
4) after filtering and drying the negative electrode graphite of step (3), placing the negative electrode graphite in a high-temperature graphitization furnace and performing oxygen-free heating, to obtain a regenerated graphite product.

2. The method for preparing battery-grade graphite by using mixed waste of positive and negative electrode materials of a failed lithium-ion battery as a raw material as claimed in claim 1, **characterized in that**: the failed lithium-ion battery positive electrode waste comprises: one or more of lithium cobalt oxide, lithium manganese oxide, lithium iron phosphate and ternary materials (lithium nickel cobalt manganese oxide).

3. The method for preparing battery-grade graphite by using mixed waste of positive and negative electrode materials of a failed lithium-ion battery as a raw material as claimed in claim 1 or 2, **characterized in that**: in the low-temperature roasting modification process, a temperature-rising rate is 5 - 20°C/minute, a roasting temperature is 400 - 600°C, and a heat preservation time is 10 - 60 minutes.

4. The method for preparing battery-grade graphite by using mixed waste of positive and negative electrode materials of a failed lithium-ion battery as a raw material as claimed in any one of claims 1 to 3, **characterized in that**: in the slurry stirring process, a slurry mass concentration is 20 - 25%, a stirring rotation speed is 1500 - 2000 r/min, and the time is 5 - 20 min.

5. The method for preparing battery-grade graphite by using mixed waste of positive and negative electrode materials of a failed lithium-ion battery as a raw material as claimed in any one of claims 1 to 4, **characterized in that**: the flotation separation process uses a flotation open circuit of coarse sorting once and fine sorting twice.

6. The method for preparing battery-grade graphite by using mixed waste of positive and negative electrode materials of a failed lithium-ion battery as a raw material as claimed in any one of claims 1 to 5, **characterized in that**: the flotation uses one of, or a combination of more than one of, n-dodecane, kerosene, diesel and sodium dodecyl sulfate to act as the collector, and uses one of, or a combination of more than one of, methyl isobutyl carbinol (MIBC), number 2 oil and secondary octanol to act as the foaming agent.

7. The method for preparing battery-grade graphite by using mixed waste of positive and negative electrode materials of a failed lithium-ion battery as a raw material as claimed in any one of claims 1 to 6, **characterized in that** the flotation conditions are: pH = 7 - 11, a dosage of coarse sorting collector is 200 - 1000 g/t, a dosage of coarse sorting foaming agent is 50 - 500 g/t, only foaming agent is added for fine sorting, a first dosage of fine sorting foaming agent is 50 - 100 g/t, and a second dosage of fine sorting foaming agent is 25 - 50 g/t.

8. The method for preparing battery-grade graphite by using mixed waste of positive and negative electrode materials of a failed lithium-ion battery as a raw material as claimed in any one of claims 1 to 7, **characterized in that**: in the weak acid washing process, a liquid-solid ratio is 10 - 30, sulfuric acid concentration is 0.01 - 0.2 mol/L, hydrogen peroxide consumption is 3-5 times a theoretical value, the temperature is 50 - 100°C, and the time is 0 - 100 min.

9. The method for preparing battery-grade graphite by using mixed waste of positive and negative electrode materials of a failed lithium-ion battery as a raw material as claimed in any one of claims 1 to 8, **characterized in that**: the graphite grade in the foam product after flotation separation > 95%, a graphite recovery rate > 65%, and a positive electrode material recovery rate in the ore slurry product > 97%.

10. The method for preparing battery-grade graphite by using mixed waste of positive and negative electrode materials of a failed lithium-ion battery as a raw material as claimed in any one of claims 1 to 9, **characterized in that**: in the graphitization repair process, a temperature-rising rate is 5 - 20°C/minute, a repair temperature is 1300 - 2800°C, and a heat preservation time is 2 - 10 hours.

11. The method for preparing battery-grade graphite by using mixed waste of positive and negative electrode materials of a failed lithium-ion battery as a raw material as claimed in any one of claims 1 to 10, **characterized in that**: after high-temperature graphitization, the degree of graphitization of the graphite product is 90 - 99%.

12. A battery-grade graphite product which is prepared by the method as claimed in any one of claims 1 to 10.

13. The use of the battery-grade graphite which is prepared by the method as claimed in any one of claims 1 to 10 in preparing lithium-ion batteries, electronic product energy storage, industrial battery energy storage, electric vehicle or electric bicycle power sources, wherein electronic products are cell phones, cameras, laptops, tablets and other hand-held electric tools, and wherein industrial batteries are wind energy, solar energy storage and standby power sources.
